# EUROPEAN PATENT APPLICATION

(11) **EP 4 538 918 A1**
(43) Date of publication of application: **16.04.2025**
(21) Application number: 24203741.4
(22) Date of filing: 30.09.2024
(51) Int. Cl.: G06F 30/10, G06F 30/15, G06F 30/17, G06F 30/23, G06F 30/27

(54) **WRINKLE PREDICTION IN COMPOSITE LAMINATE PARTS USING SURROGATE MODELS**

(30) Priority: 13.10.2023 US 202363590095 P; 21.05.2024 US 202418670202
(71) Applicant: The Boeing Company, Arlington, VA 22202 (US)
(72) Inventor: Loesche, Christopher R., Arlington, 22202 (US); Winfree, Troy, Arlington, 22202 (US); Hart, Marcus C., Arlington, 22202 (US)
(74) Representative: Morrall, Jonathan Ian McLachlan

(57) **Abstract**

A composite laminate part such as a spar having reduced ply wrinkling is designed by generating a surrogate model of the part, and performing a geodesic strain analysis of the surrogate model. The results of the analysis are used to modify the part design to reduce strains in areas of the part that may cause ply wrinkling.

## Description

### CROSS-REFERENCE TO RELATED APPLICATION

This application claims the benefit of Provisional US Patent Application No. 63/590,095 filed October 13, 2023, which is incorporated by reference herein in its entirety.

### BACKGROUND INFORMATION

### 1. Field:

This disclosure generally relates to fabrication of composite laminate parts, and deals more particularly with a method of predicting ply wrinkling during forming of the parts. The disclosure also relates to a method of designing and fabricating the parts based on the wrinkling predictions using surrogate models.

### 2. Background:

Large composite laminate parts are sometimes produced by forming a stack of composite plies to a desired part shape. The tools used to form the parts often contain global and local curvatures, ply ramps and flange angles, and various other features that can cause localized strains resulting in undesired ply wrinkling when the stack is formed to shape. One approach to solving the problem of ply wrinkling requires that parts be fully designed, reviewed, manufactured and tested in order to determine whether specific geometric features of the part cause ply wrinkling beyond allowed tolerances. In another approach, full factorial design of experiments are conducted to determine how geometric features interact to cause ply wrinkling, however this approach is costly because it requires numerous design/build/analysis cycles. In still another approach, broad design rules for the part are written based on perceived forming sensitivities that assume a worst-case strain scenario, often resulting in parts that are overdesigned and therefore more costly and/or heavier than desired.

Accordingly, it would be desirable to provide a more efficient method of designing composite laminate parts that identifies part design features adversely affecting part manufacturability early in the design process, before a fully integrated design is completed.

### SUMMARY

This disclosure relates in general to designing and manufacturing composite laminate parts, and more specifically to a method of designing parts that reduces or eliminates ply wrinkling during forming of the parts. The method allows adjustment of part features early in the design process, prior to completion of a fully integrated model. During this early design stage, part configurations are evaluated to predict ply wrinkling. Ply wrinkling for a part configuration is predicted by performing a geodesic strain analysis of a parametric model of the part to identify part features causing stress concentrations that could result in ply wrinkling. The method generates a parameterization of part shapes by design features, allowing many representative spar shapes to be produced each of which can be measured for geodesic strain.

The parameterization is a map from the part features to representative part geometry which allows a simulated DOE (design of experiments) to be run on part shapes. Geodesic strain can then be fit as a surrogate model that relates part features and geodesic strain. The output of this fitting problem is a model that allows the designer to evaluate geodesic strain for any collection of spar features without having to build a CAD model. Thus, the surrogate model is used to predict geodesic strain for multiple spar designs. By allowing early evaluation of design features in this manner, the design can be easily adjusted to reduce or avoid stress concentrations, outside of a CAD (computer aided design) environment, thereby eliminating long design iteration or the need for iterative manufacturing trial and error. In one example, the method performs geodesic strain analyses based on a parametric model of the part using tabular design feature geometry. In another example, the method computes geodesic strains based on CAD geometry using a machine learning model.

According to one aspect, a method is provided of designing a composite laminate part with reduced ply wrinkling. The method comprises generating a plurality of geometric models of the part, and performing a geodesic strain analysis of each of the geometric models. The strain analysis results in generating strain data for each of the geometric models. The method further includes generating a surrogate model that relates the geometric models with the strain data. The surrogate model is used to design a part having minimized strain.

According to still another aspect, a method is provided of designing a composite laminate spar with reduced ply wrinkling. The method comprises producing a plurality of parametric models of spars, and performing a geodesic strain analysis of each of the parametric models. The strain analysis results in generation a set of strain data for each of the parametric models. A surrogate model is generated by fitting the strain data with the parametric models. The surrogate model is used to iteratively modify the design of a spar until strain on the spar is substantially minimized.

According to still a further aspect, a method is provided of producing a surrogate model for use in designing composite laminate parts having reduced ply wrinkling. The method comprises generating a plurality of geometric models of the part, and performing a geodesic strain analysis of each of the geometric models. The strain analysis generates strain data for each of the geometric models. Each of the geometric models is fitted to the strain data, resulting in a surrogate model that can be used to iteratively modify a spar design until strain on the spar is minimized.

The features, functions, and advantages can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and advantages thereof, will best be understood by reference to the following detailed description of an illustrative examples of the present disclosure when read in conjunction with the accompanying drawings, wherein:
Figure 1 is an illustration of a perspective view of an airplane, wherein a wing box is shown in broken lines.
Figure 2 is an illustration of a perspective view of the wing box shown in Figure 1, portions of the upper wing skin broken away to reveal several wing spars.
Figure 3 is an illustration of a perspective view of a simple wing spar.
Figure 4 is an illustration of the area designated as "FIG. 4" in Figure 3, showing individual plies of the laminate.
Figure 5 is an illustration of a portion of a composite laminate spar having a ramp section.
Figure 6 is functional block diagram of one embodiment of a method of designing a composite laminate part having reduced ply wrinkling.
Figure 7 is an illustration of a table of spar data.
Figures 8-10 are illustrations of diagrammatic flow diagrams showing how geodesic strain data is produced based on geodesic analysis of parametric models.
Figure 11 is an illustration of a diagrammatic, perspective view graphically representing concentrations of compression and tension in a composite laminate spar.
Figure 12 is an illustration of a flow diagram of another method of another embodiment of a method of designing a composite laminate part having reduced ply wrinkling using CAD geometry.
Figure 13 is an illustration of a combined diagrammatic and flow diagram showing how composite laminate parts can be designed using gage maps and calculated strains in the spars.
Figure 14 is an illustration of a functional block diagram of a computer-based system for implementing the disclosed methods.
Figure 15 is an illustration of the flow diagram of a method of designing a composite laminate part with reduced ply wrinkling.
Figure 16 is an illustration of a flow diagram of a method of designing a composite laminate spar with reduced ply wrinkling.
Figure 17 is an illustration of a flow diagram of a method of producing a surrogate model for use in designing composite laminate parts having reduced ply wrinkling.
Figure 18 is an illustration of a flow diagram of aircraft production and service methodology.
Figure 19 is an illustration of a block diagram of an aircraft.

### DETAILED DESCRIPTION

The disclosed examples described below relate to a method of predicting wrinkling in composite laminate parts due to geometric part design features that result in localized strains produced as the parts are formed to shape. As used herein the terms "strain", "localized strain" and "excess strain" refer to strains produced during forming of a charge or stack of composite plies that result in undesired levels of ply wrinkling or other unacceptable non-conformities. By predicting wrinkling in advance of creating a fully integrated part design, geometric features of the part can be altered in a manner that reduces or eliminates these forming strains. The method comprises building a surrogate model that operates on part shape geometry or geometry features in order to quickly evaluate geodesic strain of a part. The evaluation of geodesic strain allows ply wrinkling predictions based on either tabular part definition files which typically form the basis for detailed CAD modeling, or a detailed CAD model itself.

In one mode of the method, a parametric model is created using the tabular data that builds representative part geometries for use in geodesic analysis that a surrogate model is fit to. This enables geodesic strain analysis to be performed prior to generating a detailed CAD model, allowing part manufacturability analysis to be performed at an early stage of the part design process. In another mode of the method, geodesic analysis results are computed based on a completed CAD geometry using Machine Learning (ML) model such as DiffusionNet.

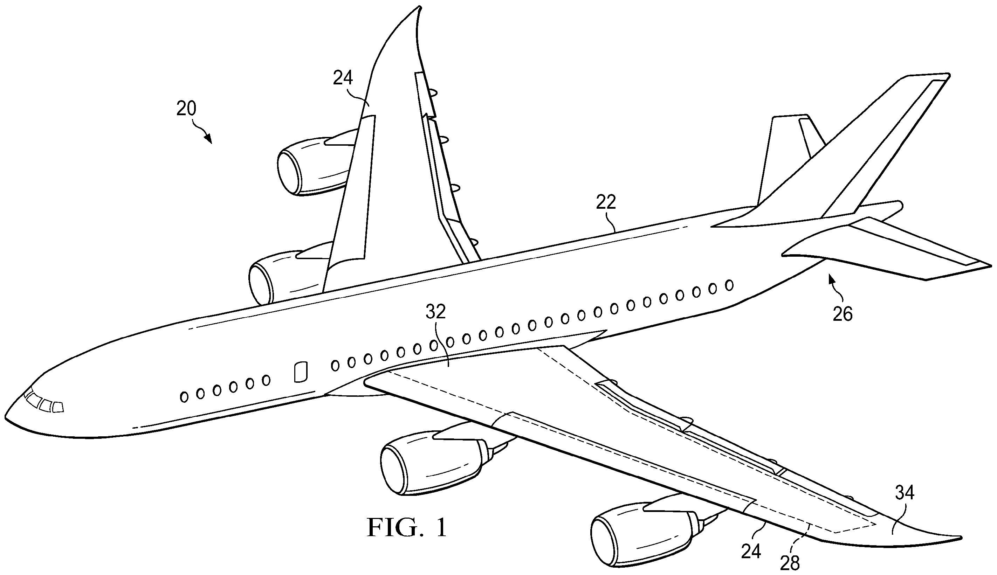

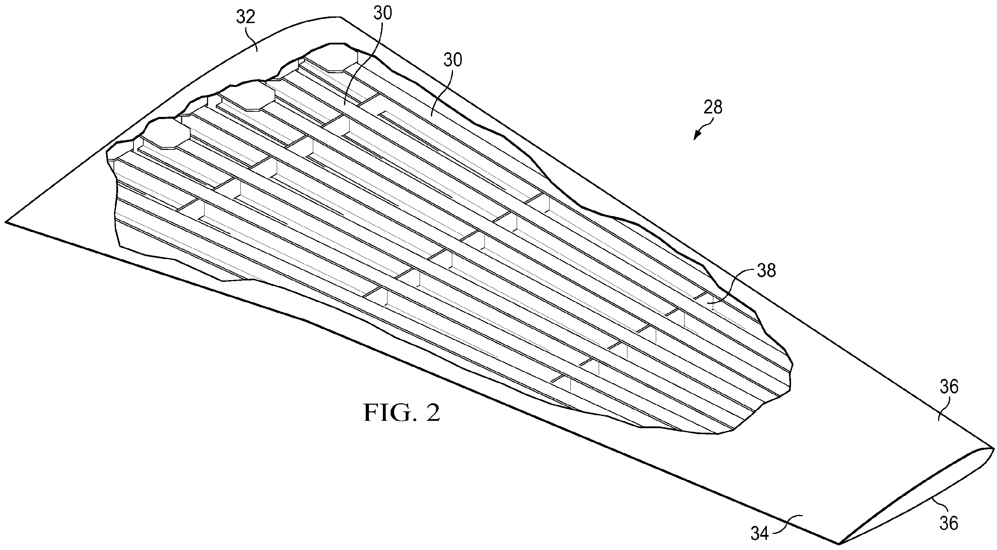

As will be discussed later, the disclosed method can be employed to design any of variety of parts that are produced by forming a charge (stack) of composite plies 44 of material such as CFRP (carbon fiber reinforced plastic). For example, referring to Figures 1 and 2, a variety of composite laminate parts are used in an airplane 20 comprising a fuselage 22, wings 24 and an empennage 26. Each of the wings 24 includes a wing box 28. The wing box 28 comprises a grid of structural members that include a plurality of composite laminate spars 30 extending from the root 32 to the tip 34 of the wing 24, as well as stringers (not shown) and cross beams or ribs 38. These structural members transfer loads applied to wing skins 36 during flight. Although not shown in the drawings, the empennage 26 may also have a grid of structural members including composite laminate spars, similar to the wing box 28. In the description blow, a wing spar 30 is used merely as an example of how the disclosed method can be employed to design a composite laminate part that is subject to forming strains that can cause ply wrinkling, however the method can be used to design a variety of other types of composite laminate parts used in an aircraft such as floor beams, stringers, frames, etc., as well as composite laminate spars forming part of the empennage 26. Also, it should be noted here that while an aircraft application is described, the disclosed method may be employed to design composite laminate parts for a wide range of applications other than aircraft.

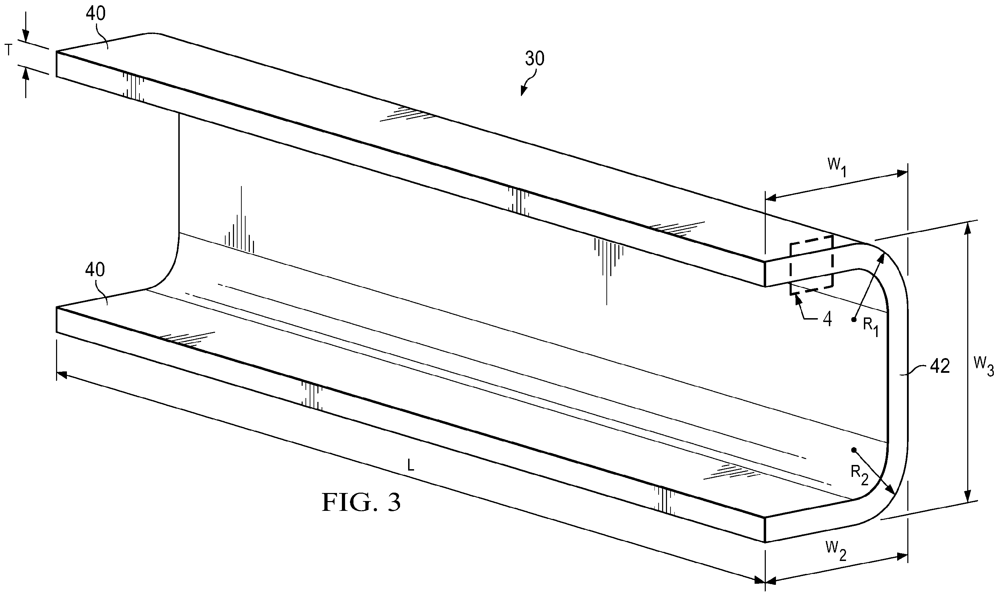

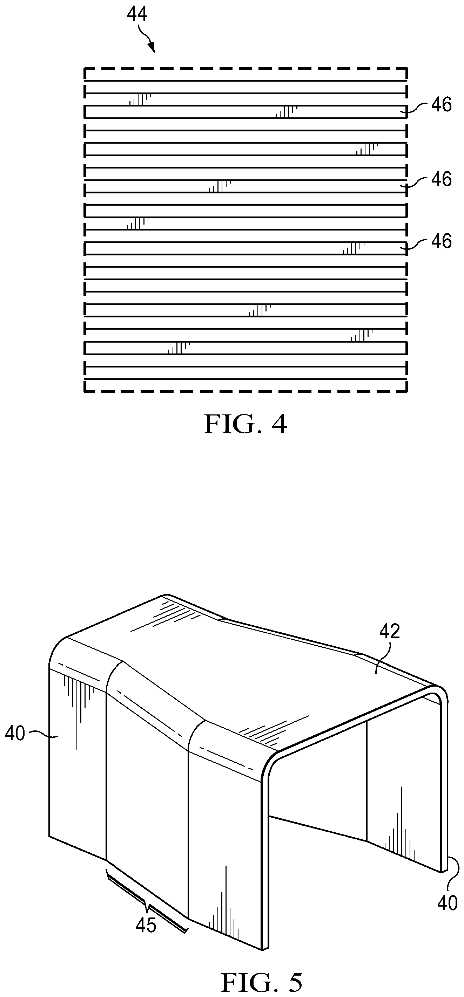

Referring also now to Figure 3 and 4, a spar 30 may have any of various shapes, and in the illustrated example, is C-shaped in cross-section. The C-shape is formed by a pair of flanges 40 that transition at radius corners R₁, R₂ into a web 42. The flanges 40 have desired widths W₁, W₂ while the web 42 has a desired width W₃. The illustrated spar 30 has a constant cross-section along its length, however in many applications the spar cross-section may not be constant. In fact, the spar 30 may have various features and variations along its length, such as pad-ups, contours, steps, jogs and the like, any number of which may occur simultaneously (i.e. in the same area) or overlap each other. For example, Figure 5 illustrates a portion of a C-shaped spar 30 having a ramp section 45 along its length. The spar 30 can be produced by any of several forming techniques such as compression molding or drape forming, in which a flat stack of composite plies 44 having varying fiber orientations is formed by tooling (not shown) into a desired shape. As will be discussed below, these features and variations in spar geometry can cause areas of the spar 30 to be placed in tension or compression during forming, producing strains that are severe enough to cause unacceptable levels of ply wrinkling or other non-conformities.

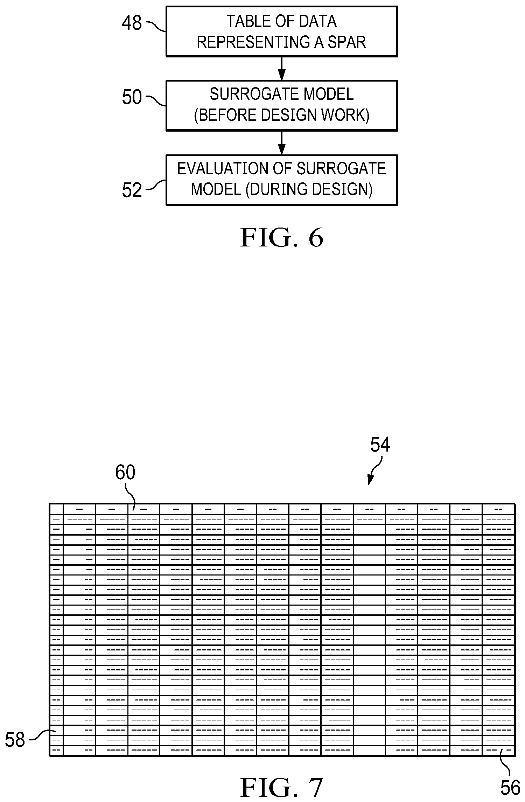

Attention is now directed to Figures 6 and 7 which are useful in explaining a first mode of implementing the method that allows quick evaluation of geodesic strains in the spar 30 that can cause ply wrinkling or other laminate nonconformities during the forming process. The ability to predict ply wrinkling allows the designer to alter spar design features at an early stage of the design process in order to arrive at a final design that minimizes localized excess strains that can lead to ply wrinkling. The method comprises two stages, the first of which is shown at 48 and 50, and the second is shown at 52. In a first step 48, a table 54 of data 56 is assembled that represents the geometry of a spar 30 (or other part). The data 56 is arranged in rows 58 and columns 60. The columns 60 respectively represent a distilled set of geometric features or geometries of the spar 30. The spar features used to populate the table 54 include those most likely to produce strain concentrations during the laminate forming process that may lead to wrinkling. These features may typically comprise, without limitation, ramp rate, ramp height, local ply drops, flange angles, flange length, gage, flange tension state, radius design, global and local curvatures and ply schedule (number, thickness and orientation of the plies).

The data in the rows 58 represent the values for each of the features or geometries represented by the columns 60 all along the length of the spar 30. The table 54 is used to create a parametric model of the spar 30 that is later used to relate the spar data 56 to geodesic strain analysis for each spar design. Parametric modeling is a computer aided design technique that involves stipulating parameters that define the geometry or features of a part, and establishing relationships between the parameters. The parametric model of the part can be automatically modified or rebuilt whenever one or more of the parameters are changed. This modeling technique is implemented using parametric modeler software incorporating algorithms that relate the parameters in a way that allows a designer to change the model of a part by changing one or more of the parameters. Thus, in the present application, the parametric model is essentially a computer implemented algorithm that parameterizes the spar design represented by table 54, allowing instantaneous changes to be made in the spar design. The parameterization process can be implemented through commercially available computer software to define the dimensions and shapes of the spar design which can be visualized in 3D if desired. The 3D spar model changes instantly as the values of the selected features (spar data 56) are changed

As shown in Figure 6, the surrogate model 50 is developed which comprises a mathematical representation of a function that relates the spar data in the table 54 with geodesic strain in the spar 30 defined by the table 54. As will be discussed below in more detail, in order to build the surrogate model, the geodesic strain data is developed for each of a plurality of the tables 54 which respectively represent differing spar designs. In effect, use of the surrogate model 50 is a way of outputting geodesic strain information all along the length of a spar 30 using parameterized tables 54 of data 56 that define different designs of the spar 30.

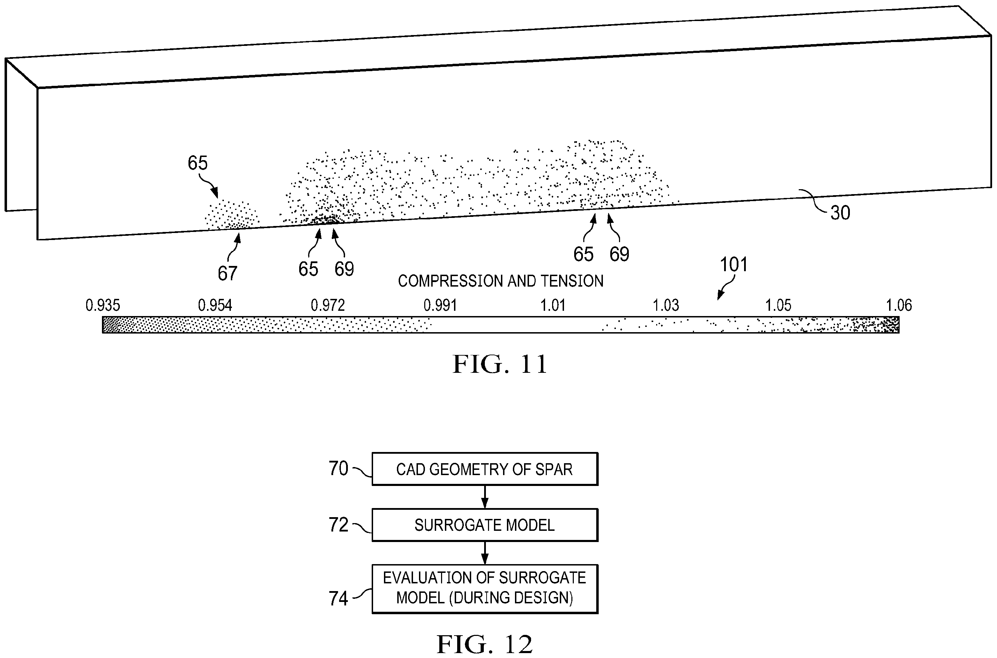

In the second stage 52 of the method shown in Figure 6, the designer uses the surrogate model 50 to make instantaneous changes to a design using an iterative technique in which the values of the data in the tables 54 are altered in order to arrive at design parameters that minimize geodesic strain in the spar 30 during the forming process. Use of the surrogate model 50 allows the designer to avoid long design loops in which intensive computations would otherwise be required to evaluate geodesic strain in the spar 30. In effect, the method uses easy-to-set up geodesic strain measurements that allow identification of compression and tension hotspots 65 (Figure 11) in a spar 30 that could lead to ply wrinkling. Quick evaluation of the surrogate model of the spar 30 for strain concentrators caused by specific geometric features of the spar 30 allows the spar design to be adjusted prior to arriving at a fully integrated design.

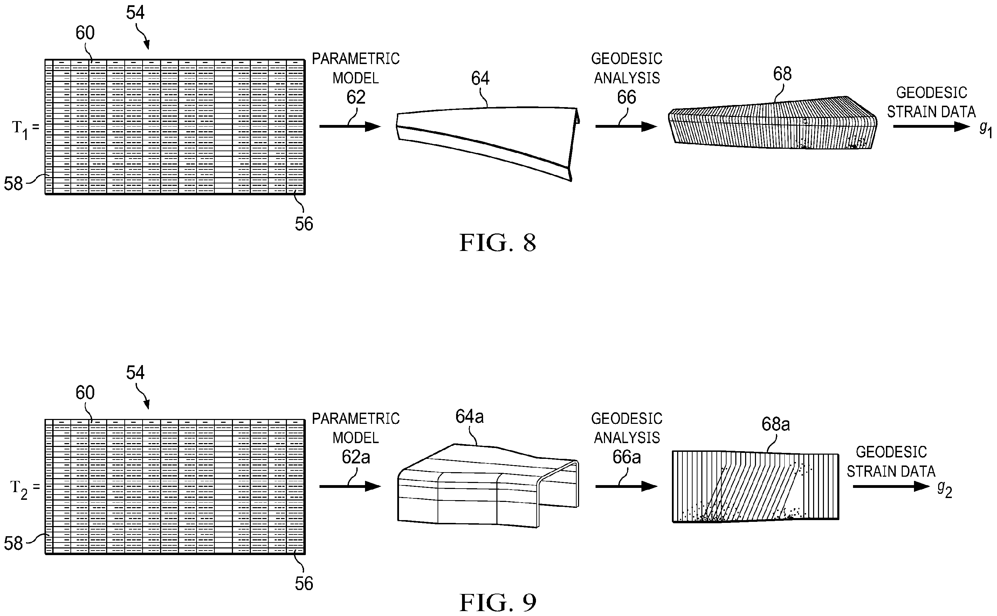

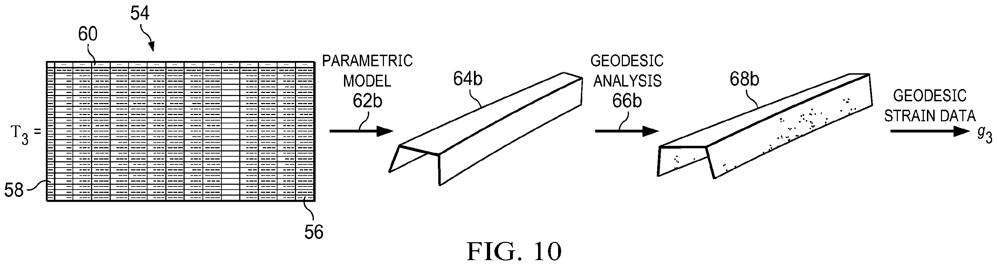

Attention is now directed to Figure 8-10 which broadly illustrate the process of generating data required for producing the surrogate model 50. Geodesic strain data is generated for a plurality of different spar data tables 54 respectively represented in the Figures as *T*₁*, T*₂, *T*₃. Although only three spar tables are shown, any number of spar tables can be used, each of which is sampled and used as an input to generate strain data *g*₁, *g₂, g₃.* Parametric spar models 62, 62a, 62b are generated using tables *T*₁, *T*₂, *T₃... T*ₙ each of which represents a particular spar design 64, 64a, 64b. Next, a geodesic strain analysis 66, 66a, 66b is performed on each of the spar designs 64, 64a, 64b, to produce geodesic strain data *g*₁, *g₂, g₃* ... *gₙ.* The process described above produces a plurality of data pairs (*T₁*, *g₁*), (*T₂, g*_{*2*)}, (*T₃,g₃*)*...* (*Tₙ,gₙ*)*.* The surrogate model 50 is a mathematical object or function that fits this data; thus, the surrogate model 50 is a function ***F*(*Tᵢ*) *= gᵢ.*** The surrogate model is a way of encoding the relationship between tabular information (tables *T*₁, *T*₂, *T₃... Tₙ*) that define the spars, and geodesic strain on those spars. The geodesic strain data *g*₁, *g₂, g₃* ... *gₙ* can be visually represented in 3D as strain "hotspots" 65 on a 3D spar model shown in Figure 11. In Figure 11, these hotspots 65 are shown as areas on the spar 30 that are in tension 69 or compression 67. Strain can be inferred from the hotspots 65 since they can produce stress that results in strain during the forming process. Thus, ply wrinkling stemming from excess strain can be inferred from the hotspots 65. In the illustrated example, the hotspots 65 are represented in gray scale that can be correlated to a scale 101 representing the degree of tension or compression, however a color scale may be used if desired where the spar model is displayed in color.

Attention is now directed to Figure 12, which is useful in explaining the second, alternate mode of implementing the disclosed method of designing a composite laminate part such as a spar 30 based on a full, rather than distilled set of geometric features of the part. Although otherwise similar to the first mode of the method described above, this method does not rely on a fixed set of distilled spar geometric features, thus allowing it to be more flexible but reliant on a full spar model. In this example, a surrogate model 72 is built using machine learning (ML) application such as a DuffusionNet learning model which can operate directly on the spar geometry. The surrogate model 72 is a mathematical representation of a function that relates a CAD model of the spar 30 with geodesic strain data for that CAD model. Using the ML application, the geodesic strain analysis 66 is based on CAD geometry presenting a complete design, thereby speeding the geodesic stress analysis computation. Similar to the previously described example, a list of the geometric features that fully define the spar 30 is generated, and a parametric spar model is produced based on these geometric features. DiffusionNet is then used to generate a surrogate model 72 of the part that can be employed to optimize manufacturability of the part. Similar to the previously described example, this example of the method allows a manufacturability analysis to be made prior to generating a final, fully integrated CAD model, thereby speeding the process of designing a composite laminate part optimized for manufacturability.

Use of the methods described above provides the designer with an understanding of how certain design features may be responsible for creating ply wrinkling, including specific areas of a part that may be subject wrinkling during the laminate forming process. Based on the results of the geodesic strain analysis 66, the designer may alter certain geometric features of a part to create a basic, master part geometry which can then be used as a basis for designing a detailed, final part design without the use of CAD tools. In other words, a final or nearly final part design can be completed relatively simply and quickly outside of the CAD environment. In effect, the method allows the geometric features of the model affecting ply wrinkling to be adjusted and selected before an actual CAD model is produced.

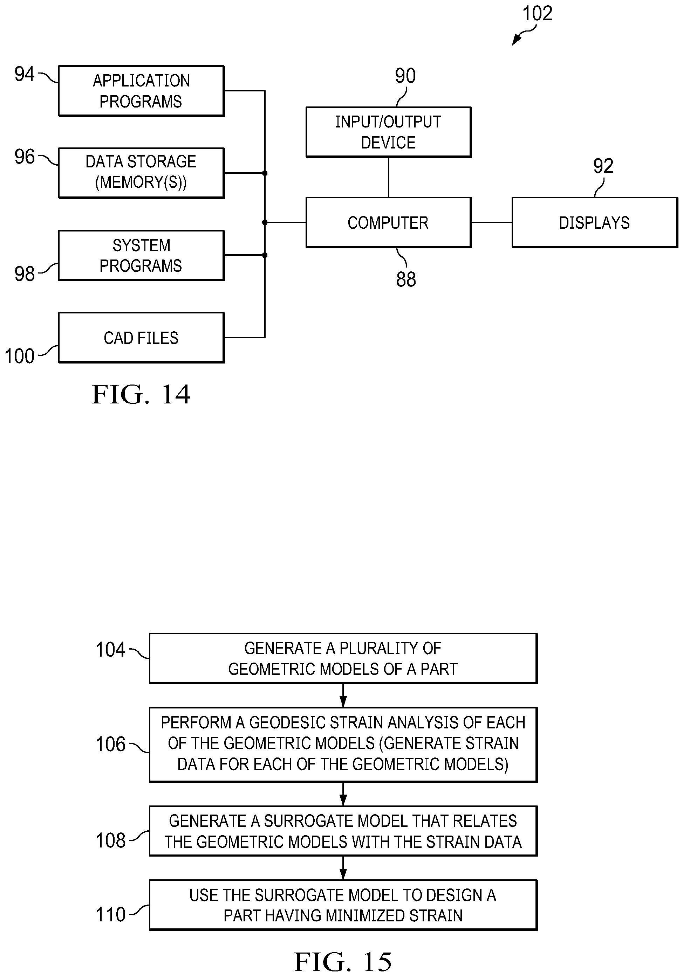

The disclosed methods can be carried out using any of a variety of computer-based systems such as the system 102 in Figure 14. The system 102 comprises a computer 88, one or more input/output devices 90, and one or more displays 92 for displaying data and 3D models. The system 102 also includes application software programs 94, data storage 96 in the form of memories, system programs 98, and CAD files 100. The geodesic strain analysis 66 can be performed using the system 102 running any of a variety of commercially available software packages. Depending upon the results of the geodesic strain analysis 66, the designer can change any of the values in the tables 54, automatically resulting in corresponding changes being made to the parametric spar models 62. The designer can repeat the process described above, each time generating a revised spar design having predictable results (strain) until a final design is achieved that eliminates unacceptable levels strain. Thus, the method allows quick evaluation of spar configurations for strain concentrators prior to completion of a fully integrated design, allowing the design to be easily changed "off-line" outside of a CAD environment, thereby avoiding long design iteration loops.

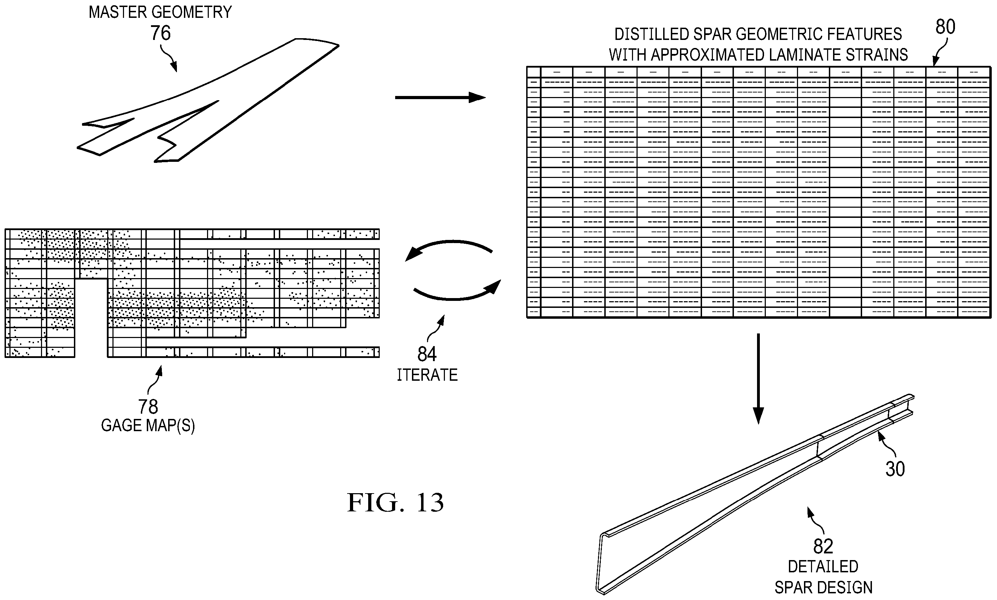

Referring now to Figure 13, as previously mentioned, using the process described above, a master part geometry 76 of a spar 30 is designed that can be refined by modifications to gage maps 78 that specify the number of plies to be used in various sections of the spar 30. In some cases, it may be also necessary as part of this design process to consider, and modify as necessary, interfacing part geometries that can result in localized excess strain. One example of interfacing part geometries affecting strain is the rate at which skin plies are ramped at the interface between a skin and a spar. The ramp rates directly affect the gage maps 78 which in turn impact the geodesic strain values. The gage maps 78 can be modified by the designer to alter the part interface geometries in order to reduce localized excess strain. For each set of values in the gage maps 78, the strains in the surrogate spar model can be calculated to determine whether strain hotspots exist in the model. If such hotspots exist, then the values in the gage maps 78 can be modified in order to reduce or eliminate the hotspots. The process of making modifications to the gage maps 78 and then calculating the laminate strains 80 is iterated 84 until the calculated laminate strains 80 are reduced to a point indicating that ply wrinkling will be minimized or eliminated during the forming process. This process results in a final, detailed spar design 82.

Figures 15-17 broadly illustrate and summarize the methods described above. Figure 15 shows the steps of a method of designing a composite laminate part that reduces possible ply wrinkling and which can be performed in advance of finalizing a CAD model. The method begins at 104 generating a plurality of geometric models of a part. As previously discussed, these geometric models can be represented as parametric models based on tabular data defining geometric features of the part. At 106, a geodesic strain analysis is performed of each of the geometric models. This strain analysis results in the generation of strain data for each of the geometric models. At 108, a surrogate model is generated that relates the geometric models with the strain data. Then at 110, the surrogate model can be used to design a part having minimized excess local strain.

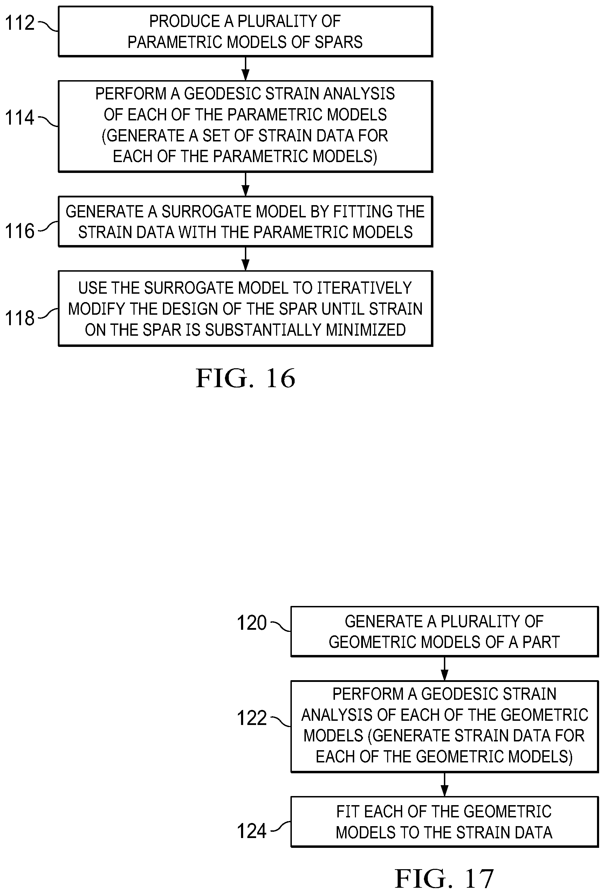

Figure 16 shows the steps of a method of designing a composite laminate part with reduced ply wrinkling. At 112, a plurality of parametric models of spars is produced. Then at 114, a geodesic strain analysis is performed of each of the parametric models, resulting in generation of a set of strain data for each of the parametric models. At 116, a surrogate model is generated by fitting the strain data with the parametric models. Then, at 118, the surrogate model is used to iteratively modify the design of the spar until strain on the spar is substantially minimized.

Figure 17 broadly illustrates the steps of a method of producing a surrogate model for use in designing composite laminate parts having reduced ply wrinkling. At 120, a plurality of geometric models of a part is generated. At 122, a geodesic strain analysis is performed of each of the geometric models, resulting in generation of strain data for each of the geometric models. Finally at 124, each of the geometric models is fitted to the strain data, resulting in a surrogate model that can be used to iteratively modify spar designs until excess strains are minimized.

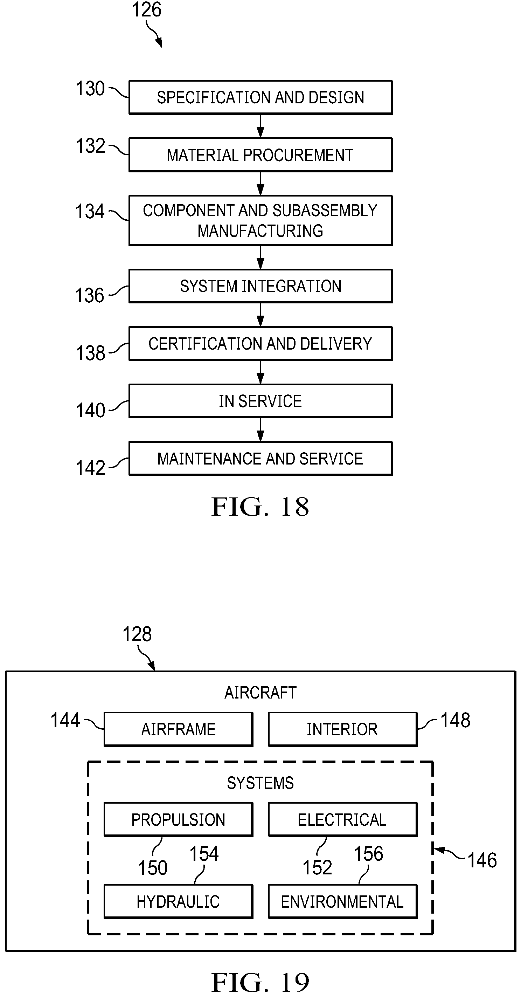

Examples of the disclosure may find use in a variety of potential applications, particularly in the transportation industry, including for example, aerospace, marine, automotive applications and other application where formed composite laminate parts are used. Thus, referring now to Figures 18 and 19, examples of the disclosure may be used in the context of an aircraft manufacturing and service method 126 as shown in Figure 18 and an aircraft 128 as shown in Figure 19. Aircraft applications of the disclosed examples may include a variety of composite laminate parts such as wing spars forming part of an aircraft's airframe 128. During pre-production, the method 126 may include specification and design 130 of the aircraft 128 and material procurement 132. During production, component and subassembly manufacturing 134 and system integration 136 of the aircraft 128 takes place. Thereafter, the aircraft 128 may go through certification and delivery 138 in order to be placed in service 140. While in service by a customer, the aircraft 128 is scheduled for routine maintenance and service 142, which may also include modification, reconfiguration, refurbishment, and so on.

Each of the processes of method 126 may be performed or carried out by a system integrator, a third party, and/or an operator (e.g., a customer) . For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in Figure 19, the aircraft 128 produced by method 126 may include an airframe 144 with a plurality of high level systems 146 and an interior 148. Examples of high-level systems 146 include one or more of a propulsion system 150, an electrical system 152, a hydraulic system 154 and an environmental system 156. Any number of other systems may be included. Although an aerospace example is shown, the principles of the disclosure may be applied to other industries, such as the marine and automotive industries.

Systems and methods embodied herein may be employed during any one or more of the stages of the aircraft manufacturing and service method 126. For example, components or subassemblies corresponding to component and subassembly manufacturing 134 may be fabricated or manufactured in a manner similar to components or subassemblies produced while the aircraft 128 is in service. Also, one or more apparatus examples, method examples, or a combination thereof may be utilized during the component and subassembly manufacturing 134 and system integration 136, for example, by substantially expediting assembly of or reducing the cost of an aircraft 128. Similarly, one or more of apparatus examples, method examples, or a combination thereof may be utilized while the aircraft 128 is in service, for example and without limitation, to maintenance and service 142.

The description of the different illustrative examples has been presented for purposes of illustration and description, and is not intended to be exhaustive or limited to the examples in the form disclosed. Many modifications and variations will be apparent to those of ordinary skill in the art. Further, different illustrative examples may provide different advantages as compared to other illustrative examples. The example or examples selected are chosen and described in order to best explain the principles of the examples, the practical application, and to enable others of ordinary skill in the art to understand the disclosure for various examples with various modifications as are suited to the particular use contemplated.

Also provided are the following clauses:
1. A method of designing a composite laminate part with reduced ply wrinkling, comprising:
   generating a plurality of geometric models of a part;
   performing a geodesic strain analysis of each of the geometric models, including generating strain data for each of the geometric models;
   generating a surrogate model that relates the geometric models with the strain data; and
   using the surrogate model to design a part having minimized strain.
2. The method of clause 1, wherein generating a plurality of geometric models includes producing parametric models of the part allowing features of the part to be modified.
3. The method of clause 2, wherein producing the parametric models includes generating a plurality of tables each containing data representing values for geometric features of the part.
4. The method of clause 3, wherein generating the tables includes selecting geometric features of the part that contribute to ply wrinkling.
5. The method of any preceding clause, wherein generating the surrogate model includes fitting the geometric model with the strain data.
6. The method of any preceding clause, wherein using the surrogate model includes iteratively modifying a design of the part until the strain is minimized.
7. The method of any preceding clause, wherein performing the geodesic strain analysis and generating the surrogate model are performed using a programmed computer.
8. The method of any preceding clause, further comprising generating a 3D display of the part showing areas of stress concentrations.
9. The method of any preceding clause, wherein generating a plurality of geometric models of a part includes generating a CAD model of the part, and modifying the CAD model.
   9a. The method of any preceding clause, wherein the part is a spar.
   9b. The method of any preceding clause, further comprising outputting the designed part having minimized strain.
   9c. The method of any preceding clause, further comprising manufacturing the part having minimized strain.
10. A method of designing a composite laminate spar with reduced ply wrinkling, comprising:
   producing a plurality of parametric models of spars;
   performing a geodesic strain analysis of each of the parametric models, including generating a set of strain data for each of the parametric models;
   generating a surrogate model by fitting the strain data with the parametric models; and
   using the surrogate model to iteratively modify the design of a spar until strain on the spar is substantially minimized.
11. The method of clause 10, wherein producing a plurality of parametric models includes selecting geometric features of the spar that may affect strain, and assigning values for each of the geometric features.
12. The method of clause 11, and wherein producing the plurality of parametric models includes arranging the geometric features and the values for each of the geometric features in a table, and converting the table into a parametric model can be electronically modified.
13. The method of any of clauses 10 to 12, further comprising producing a 3D display representing a design of a spar, including showing areas of stress concentration on the spar.
14. The method of any of clauses 10 to 13, wherein producing a plurality of parametric models of spars includes providing a CAD model of the spar and modifying the CAD model.
   14a. The method of any of clauses 10 to 13, further comprising outputting the final design of a spar.
   14b. The method of any of clauses 10 to 14a, further comprising manufacturing a spar according to the final design of the spar.
15. A method of producing a surrogate model for use in designing composite laminate parts having reduced ply wrinkling, comprising:
   generating a plurality of geometric models of a part;
   performing a geodesic strain analysis of each of the geometric models, including generating strain data for each of the geometric models; and
   fitting each of the geometric models to the strain data.
16. The method of clause 15, wherein generating a plurality of geometric models includes generating parametric models defining geometric features of the part.
17. The method of clause 16, wherein generating the parametric models includes selecting geometric features of the part that can result in stress concentrations in the part, and assigning values for each of the geometric features.
18. The method of clause 17, wherein generating the parametric models includes arranging the geometric features and the values in a table wherein each of the geometric features is assigned multiple values.
19. The method of any of clauses 15 to 18, wherein generating a plurality of geometric models includes providing a CAD model of the part and modifying the CAD model.
20. The method of any of clauses 15 to 19, further comprising generating a 3D display of each of the geometric models showing stress concentrations resulting from the geodesic strain analysis for the geometric models.
   20a. The method of any of clauses 15 to 20 for use in the method of any of clauses 1 to 14.
21. A computer readable medium comprising instructions which, when executed by a processor, perform the method of any of clauses 1 to 20a.
   21a. A part manufactured according to the method of clause 9c.
   21b. A spar manufactured according to the method of clause 14b.

## Claims

1. A method of designing a composite laminate spar with reduced ply wrinkling, comprising:
producing a plurality of parametric models of spars;
performing a geodesic strain analysis of each of the parametric models, including generating a set of strain data for each of the parametric models;
generating a surrogate model by fitting the strain data with the parametric models; and
using the surrogate model to iteratively modify the design of a spar until strain on the spar is substantially minimized.

2. The method of claim 1, wherein producing a plurality of parametric models includes selecting geometric features of the spar that may affect strain, and assigning values for each of the geometric features.

3. The method of claims 1 or 2, and wherein producing the plurality of parametric models includes arranging the geometric features and the values for each of the geometric features in a table, and converting the table into a parametric model can be electronically modified.

4. The method of any preceding claim, further comprising producing a 3D display representing a design of a spar, including showing areas of stress concentration on the spar.

5. The method of any preceding claim, wherein producing a plurality of parametric models of spars includes providing a CAD model of the spar and modifying the CAD model.

6. The method of any preceding claim, further comprising outputting the final design of a spar.

7. The method of any preceding claim, further comprising manufacturing the final design of a spar.

8. A method of producing a surrogate model for use in designing composite laminate parts having reduced ply wrinkling, comprising:
generating a plurality of geometric models of a part;
performing a geodesic strain analysis of each of the geometric models, including generating strain data for each of the geometric models; and
fitting each of the geometric models to the strain data.

9. The method of claim 8, wherein generating a plurality of geometric models includes generating parametric models defining geometric features of the part.

10. The method of claim 7 or claim 8, wherein generating the parametric models includes selecting geometric features of the part that can result in stress concentrations in the part, and assigning values for each of the geometric features.

11. The method of claim 10, wherein generating the parametric models includes arranging the geometric features and the values in a table wherein each of the geometric features is assigned multiple values.

12. The method of any of claims 8 to 11, wherein generating a plurality of geometric models includes providing a CAD model of the part and modifying the CAD model.

13. The method of any of claims 8 to 12, further comprising generating a 3D display of each of the geometric models showing stress concentrations resulting from the geodesic strain analysis for the geometric models.

14. The method of any of claims 8 to 13 for use in the method of any of claims 1 to 7.

15. A computer readable medium comprising instructions which, when executed by a processor, perform the method of any of claims 1 to 14.
